Europäisches Patentamt

European Patent Office

Office européen des brevets

(11) Veröffentlichungsnummer: **0 062 788**
**B1**

(12) **EUROPÄISCHE PATENTSCHRIFT**

(45) Veröffentlichungstag der Patentschrift: **12.11.86**

(51) Int. Cl.⁴: **B 29 C 49/04,** B 29 D 23/22, B 29 C 49/78

(21) Anmeldenummer: **82102360.3**

(22) Anmeldetag: **22.03.82**

(54) Verfahren und Vorrichtung zum Herstellen von vorzugsweise schlauchförmigen Strangabschnitten aus thermoplastischem Kunststoff.

(30) Priorität: **09.04.81 DE 3114371**

(43) Veröffentlichungstag der Anmeldung:
**20.10.82 Patentblatt 82/42**

(45) Bekanntmachung des Hinweises auf die Patenterteilung:
**12.11.86 Patentblatt 86/46**

(84) Benannte Vertragsstaaten:
**AT BE CH DE FR GB IT LI LU NL SE**

(56) Entgegenhaltungen:
**DE-A-1 900 532**
**DE-A-1 934 284**
**US-A-3 530 536**
**US-A-4 120 630**

(73) Patentinhaber: **Krupp Kautex Maschinenbau GmbH**
**D-5300 Bonn 3 (DE)**

(72) Erfinder: **Thomas, Alfred**
**Wiesenweg 4**
**D-5202 Hennef-Dambroich (DE)**
Erfinder: **Äpfelbach, Bruno**
**Geschwister-Scholl-Strasse 7**
**D-5240 Betzdorf (DE)**

(74) Vertreter: **Koepsell, Helmut, Dipl.-Ing.**
**Mittelstrasse 7**
**D-5000 Köln 1 (DE)**

**Beschreibung**

Die Erfindung betrifft ein Verfahren und eine Vorrichtung zum Herstellen von vorzugsweise schlauchförmigen Strangabschnitten (Vorformlingen) aus thermoplastischem Kunststoff mittels Extrudieren des warmplastischen Kunststoffes aus einem Strangpresskopf, in den der Kunststoff durch eine Eintrittsöffnung eintritt und aus dem er durch eine spaltartige Austrittsöffnung austritt, wobei die Wandstärke des Strangabschnittes während des Extrusionsvorganges nach einem bestimmten Programm verändert wird. Derartige Strangabschnitte werden normalerweise als Vorformlinge verwendet, die anschliessend in einem weiteren Arbeitsgang aufgeweitet und zu einem Fertigprodukt, beispielsweise einer Flasche, einem Fass, einem Tank oder dgl., verarbeitet werden. Die Austrittsöffnung ist im Falle der Herstellung von schlauchartigen Strangabschnitten als Ringspalt ausgebildet. Da dies in der Praxis der häufigste Anwendungsfall ist, werden im folgenden immer das Herstellen eines schlauchförmigen Strangabschnittes und eine ringförmige Austrittsöffnung vorausgesetzt. Allerdings ist die Erfindung auch auf Strangabschnitte, die eine andere Querschnittsform aufweisen, anwendbar, z. B. im Zusammenhang mit dem Strangpressen von band- oder folienartigen Strangabschnitten, wobei auch hier unterschiedliche Querschnittsformen möglich sind.

Die Erfindung geht davon aus, dass normalerweise die tatsächliche Länge eines Strangabschnittes am Ende des Extrusionsvorganges kleiner oder grösser ist als die Länge des Strangabschnittes, der die Austrittsöffnung des Spritzkopfes während des Extrusionsvorganges passiert hatte. Diese Länge, die im folgenden "Austrittslänge" genannt wird, kann direkt, beispielsweise unter Verwendung einer vom Strang (Extrudat) angetriebenen Rolle, gemessen werden. Es ist aber auch möglich, sie aus der Geschwindigkeit, mit der der Strangabschnitt aus der Austrittsöffnung austritt, und der Zeit, die notwendig ist, das gesamte, den fertigen Strangabschnitt bildende Material aus dem Spritzkopf zu extrudieren, zu errechnen.

Die Abweichungen der tatsächlichen Länge des Strangabschnittes am Ende des Extrusionsvorganges von der Austrittslänge können unterschiedliche Ursachen haben. So weisen viele thermoplastische Kunststoffe ein ausgeprägtes Rückstellvermögen auf, welches eine Schrumpfung des Extrudats nach Verlassen des Spritzkopfes zur Folge hat mit dem Ergebnis, dass die tatsächliche Länge des Strangabschnittes am Ende des Extrusionsvorganges geringer ist als die Austrittslänge. Versuche haben gezeigt, dass die Austrittslänge das 1,8-fache und mehr der effektiven Endlänge des fertigen Strangabschnittes betragen kann. Dabei sind die nach Verlassen des Spritzkopfes auf das Extrudat einwirkenden Rückstellkräfte sehr unterschiedlich. Sie hängen ab insbesondere von Austrittsgeschwindigkeit, Druck und Temperatur in dem aus Extruder und Spritzkopf bestehenden System, von den Querschnittsveränderungen, die das Material während des Extrusionsvorganges erfährt, sowie von Eigenschaften des Materials. In bezug auf letzteres muss sogar damit gerechnet werden, dass bei gleichem Material von Charge zu Charge die Rückstellkräfte unterschiedlich sein können.

Da das Gewicht des am Spritzkopf während des Extrusionsvorganges hängenden Strangabschnittes den Rückstellkräften entgegenwirkt, spielen auch Länge und Gewicht des Strangabschnittes in bezug auf den Unterschied zwischen Austrittslänge und effektiver Länge eine Rolle. Das durch die Rückstellkräfte bewirkte Schrumpfen tritt relativ schnell nach dem Verlassen des Strangpresskopfes auf, so dass es kurz nach Passieren der Austrittsöffnung nicht mehr sehr gross ist. Dabei ist auch zu berücksichtigen, dass die Wirkung der Rückstellkräfte mit zunehmender Länge des Extrudates abnimmt, da, wie bereits gesagt, mit der Länge auch das Gewicht zunimmt, welches den Rückstellkräften entgegenwirkt. Jedenfalls wird normalerweise die Wirkung der Rückstellkräfte über die Länge des Strangabschnittes unterschiedlich sein.

Insbesondere Polyolefine weisen ein ausgeprägtes Rückstellvermögen auf, das jedoch nicht auf diese Kunststoffe beschränkt ist. Anderseits gibt es Kunststoffe, deren Extrudate während des Auspressens eine Längung erfahren, so dass die effektive Endlänge eines fertigen Strangabschnittes grösser ist als die Austrittslänge. Dieses Längerwerden des Strangabschnittes während des Auspressvorganges ist im wesentlichen darauf zurückzuführen, dass der Kunststoff nach Verlassen des Spritzkopfes innerhalb des Stranges, insbesondere unter der Einwirkung des Eigengewichtes, nach unten fliesst, wobei davon auszugehen ist, dass der Strang normalerweise von oben vertikal nach unten extrudiert wird. Auch hier gilt, dass Austrittsgeschwindigkeit, Druck und Temperatur in dem aus Extruder und Spritzkopf bestehenden System, Eigenschaften des zu verarbeitenden Kunststoffes und Gewicht des Strangabschnittes wesentlich sind für das Ausmass der Längung, das, wie beim Rückstellvermögen anderer Kunststoffe, von Strangabschnitt zu Strangabschnitt unterschiedlich sein kann. Typische Kunststoffe, bei denen während des Ausstossens eine Längung stattfindet, sind Zelluloseazetat und PVC, ohne dass diese Aufzählung vollständig ist.

Die Tatsache, dass es bei gleichbleibendem Materialvolumen und gleichbleibender Grösse der Austrittsöffnung des Spritzkopfes zu unterschiedlichen Längen der Strangabschnitte kommen kann, ist aus der DE—OS 25 44 609 bekannt, in der eine Vorrichtung beschrieben wird, die es erlaubt, die Schwankungen der Endlänge des Strangabschnittes zu beseitigen oder zumindest merklich zu verringern.

Es ist weiterhin aus der DE—OS 25 44 609 bekannt, die Spaltbreite der Austrittsöffnung des Spritzkopfes nach einem bestimmten Programm während des Ausstossvorganges zu verändern, um so die Wanddicke des Strangabschnittes zu beeinflussen. Durch diese Massnahme soll die Wandstärke des Fertigproduktes, also beispielsweise eines aus dem Strangabschnitt in einer Hohlform aufzublasenden Behälters, an die jeweiligen Erfordernisse angepasst werden. Diese können beispielsweise darin bestehen, dass die Bereiche des Strangabschnittes, die in der Hohlform unter der Einwirkung des im allgemeinen gasförmigen Druckmittels am stärksten aufgeweitet werden, eine grössere Wandstärke erhalten, damit sie nach Beendigung des Aufweitvorganges am Endprodukt immer noch eine ausreichend grosse Wandstärke haben. Das Eintreten des angestrebten Effektes, also am Endprodukt in bestimmten Bereichen desselben vorbestimmte Wandstärken zu haben, setzt voraus, dass einmal die Verteilung der Wandstärke am Strangabschnitt der Verteilung am späteren Endprodukt entspricht und dass zum anderen ein mit einer solchen Wandstärkenverteilung versehener Strangabschnitt auch die richtige Lage relativ zur Blasform einnimmt. Die vorerwähnten Schwankungen bezüglich der Länge des Strangabschnittes erschweren die genaue Zuordnung des Wanddickenprogramms zum Stangabschnitt, da im allgemeinen die Verstellung der Spaltbreite der Austrittsöffnung in Abhängigkeit von Einflüssgrössen erfolgt, die den Unterschied zwischen der Austrittslänge des Strangabschnittes einerseits und seiner effektiven Endlänge nicht berücksichtigen.

So ist es aus der DE—A—1900532 bekannt, die Programmiereinrichtung für die Wandstärkenverteilung in Abhängigkeit von der Bewegung des freien Endes des Strangabschnittes zu steuern. Aus den einleitenden Erläuterungen ergibt sich, dass aufgrund der Verkürzung, die bei manchen Kunststoffen verursacht durch deren viskoelastisches Verhalten und das dadurch vorhandene Rückstellvermögen eintritt, oder aufgrund der Längung während des Ausstossvorganges bei anderen Kunststoffen die Bewegung des freien Endes des Strangabschnittes normalerweise nicht der Austrittsgeschwindigkeit des Extrudats beim Passieren der Austrittsöffnung entspricht, so dass von vornherein, beispielsweise bei konstantem Abstand der Schaltpunkte in der Programmiereinrichtung, die eine Änderung der Spaltbreite der Austrittsöffnung oder eine Änderung der Richtung der Spaltbreitenänderung bewirken, die entsprechenden Punkte auf dem Strangabschnitt in ungleichen Abständen voneinander plaziert werden. Diese Plazierung kann dann später noch einmal zusätzlich beeinflusst werden durch die auf das viskoelastische Verhalten oder die Längung des Strangabschnittes zurückgehenden Änderung der Länge des Extrudates nach Passieren der Austrittsöffnung. D. h., dass einmal das Aufbringen der Wandstärkenprogramms auf den Strangabschnitt bezüglich der Verteilung auf demselben von unzutreffenden Voraussetzungen ausgeht und dass darüber hinaus nach Aufbringen des Wandstärkenprogrammes auf dem Strangabschnitt durch Schrumpfung oder Längung zusätzlich eine Beeinflussung der Wandstärkenverteilung über die Längserstreckung des Strangabschnittes erfolgt.

Auch bei Steuerung der Programmiereinrichtung für die Wandstärkenverteilung in Abhängigkeit von anderen Parametern, beispielsweise in Abhängigkeit von der Zeit oder bei Akkumulatorspritzköpfen in Abhängigkeit von der Bewegung eines den Kunststoff aus dem Akkumulator ausstossenden Kolbens, ist kein besseres Resultat zu erzielen, da auch in diesen Fällen durch die vorerwähnten Einflussgrössen eine Verzerrung der Wandstärkenverteilung über die Länge des Strangabschnittes unvermeidbar ist.

Der Erfindung liegt somit unter anderem die Aufgabe zugrunde, Verfahren und Vorrichtung der eingangs beschriebenen Art so auszugestalten, dass die vorstehend erläuterten Nachteile zumindest stark reduziert werden. Es soll möglich sein, die Wanddickenverteilung am Strangabschnitt und die Zuordnung desselben zum Formnest einer Hohlform, in welcher der Strangabschnitt zum Fertigerzeugnis aufgeweitet wird, präziser durchzuführen als es bisher möglich gewesen ist.

Zur Lösung dieser Aufgabe schlägt die Erfindung vor, die Länge des die Austrittsöffnung passierenden Strangabschnittes (Austrittslänge) zu erfassen und die die Veränderung der Wandstärke bewirkende Einrichtung in Abhängigkeit von der Austrittslänge zu steuern. Hierdurch wird erreicht, dass das Aufbringen des Wandstärkenprogramms auf den Strangabschnitt wesentlich genauer als bei Anwendung bekannter Verfahren erfolgt, da der Parameter "Austrittslänge" von Schrumpfung oder Längung zumindest weitgehend unbeeinflusst ist.

Voraussetzung für das Verfahren gemäss der Erfindung ist, dass die Austrittslänge direkt an der Austrittsöffnung oder doch in einem so geringen Abstand von derselben durchgeführt wird, dass die vorerwähnten Verzerrungen noch nicht oder jedenfalls in keinem ins Gewicht fallenden Ausmass eintreten können. Dies gilt auch bei einer anderen Möglichkeit, bei welcher die Geschwindigkeit des Strangabschnittes beim Austreten aus der Austrittsöffnung erfasst und die Wandstärkenverteilung über den Strangabschnitt in Abhängigkeit von der Austrittsgeschwindigkeit und der Zeit gesteuert wird.

Durch die vorbeschriebenen Möglichkeiten wird bereits eine erhebliche Verbesserung gegenüber dem Stand der Technik erzielt, da das Aufbringen des Wandstärkenprogramms auf den Strangabschnitt zumindest weitgehend von Verzerrungen frei ist.

Darüber hinaus sieht die Erfindung aber auch die Möglichkeit vor, die nach dem Aufbringen des Wandstärkenprogramms auf den Strangabschnitt auftretenden Verzerrungen der programmabhängigen Wandstärkenverteilung zu reduzieren. Dies kann gemäss einem weiteren Vorschlag der Erfindung dadurch geschehen, dass die Austrittslänge des Strangabschnittes einerseits und die jeweils zugehörige Effektivlänge des Strangabschnittes andererseits gemessen und beide Werte miteinander verglichen und in Abhängigkeit vom Ergebnis dieses Vergleiches Betriebsgrössen der Extrusionsvorrichtung zusätzlich beeinflusst werden, um erforderlichenfalls zusätzliche Veränderungen in bezug auf die Wandstärke derart zu bewirken, dass von Strangabschnitt zu Strangabschnitt eine möglichst gleichbleibende Verteilung der Wandstärke über die Länge der Strangabschnitte erreicht wird. Hierbei wird vorausgesetzt, dass, da normalerweise immer ein Unterschied zwischen Austrittslänge und effektiver Länge vorhanden sein wird, zu Beginn eines Programms zur Herstellung bestimmter Strangabschnitte das Normalerverhalten des zu verarbeitenden Materials unter gegebenen Umständen festgestellt wird, wobei dieses Normalverhalten auch einen bestimmten Unterschied zwischen Austrittslänge und effektiver Länge beinhaltet. Dies wird während der Dauer des Programms als Soll-Wert genommen, so dass der Vergleich zwischen Austrittslänge und effektiver Länge dazu dient, Abweichungen von diesem Sollwert so gering wie möglich zu halten.

Im Ergebnis bedeutet dies, dass bei gleichem Abstand der Schaltpunkte der Programmiereinrichtung voneinander die den Schaltpunkten entsprechenden Stellen auf dem Strangabschnitt, bezogen auf dessen Austrittslänge, Abstände aufweisen, die dann im Laufe der nach Passieren der Austrittsöffnung eintretenden Längungen oder Kürzungen zu relativ gleichen Abständen "verzerrt" werden, so dass die den Schaltpunkten der Programmiereinrichtung entsprechenden Punkte oder Stellen auf dem Extrudat so liegen, dass jeder Strangabschnitt bzw. dessen Wandstärkenverteilung insbesondere über dessen Längsverlauf wenigstens annähernd die richtige relative Lage zum Formnest der Hohlform einnimmt, in welcher die Weiterverarbeitung erfolgt.

Besonders vorteilhaft ist, dass diese richtige relative Lage von Strangabschnitt zu Strangabschnitt mit einer Genauigkeit wiederholbar ist, die merklich besser ist als bei bekannten Verfahren. Hier gilt ebenfalls, dass anstelle von Austrittslänge und effektiver Länge Austrittsgeschwindigkeit und die Geschwindigkeit erfasst werden können, mit der das freie Ende des Strangabschnittes sich während des Extrusionsvorganges vor-, also vom Spritzkopf wegbewegt. Eine besondere Berücksichtigung der durch Änderungen der Spaltbreite der Austrittsöffnung bewirkte Geshwindigkeitsänderungen wird hierbei normalerweise nicht erforderlich sein, da derartige Änderungen sowohl die Austrittsgeschwindigkeit als auch die Geschwindigkeit, mit der das freie Ende des Strangabschnittes sich vorbewegt, betreffen.

Die für die Aufbringung der Wandstärkenverteilung benutzte Einrichtung kann auf der Basis des vorerwähnten, empirisch festgestellten Normalerverhaltens so eingestellt werden, dass beim Aufbringen des Programms auf den Strangabschnitt die nachfolgende Schrumpfung oder Längung berücksichtigt wird, so dass nach eingetretener Schrumpfung oder Längung das Programm seine Soll-Lage auf dem Strangabschnitt einnimmt, also beispielsweise mit gleichen Abständen zwischen den den Schaltpunkten der Programmiereinrichtung entsprechenden Punkten auf dem Strangabschnitt. Je geringer Änderungen des Unterschiedes zwischen Austrittslänge und effektiver Länge bzw. Austrittsgeschwindigkeit und Geschwindigkeit des freien Endes des Strangabschnitts gehalten werden können, desto genauer bleibt die Wandstärkenverteilung auf dem Strangabschnitt.

Hierzu sieht die Erfindung die Möglichkeit vor, dass die Spaltbreite der Austrittsöffnung zur Beeinflussung der Länge des Strangabschnittes in Abhängigkeit vom Vergleichsergebnis hinsichtlich Länge und/oder Geschwindigkeit verändert wird mit dem Ziel, die effektive Länge der Strangabschnitte möglichst konstant zu halten. D. h., dass den in Abhängigkeit vom eingestellten Wanddickenprogramm bewirkten Änderungen der Spaltbreite der Austrittsöffnung noch eine weitere Änderung überlagert wird derart, dass die sich aus dem Programm ergebende Wanddicke proportional vegrössert oder verkleinert wird, um ein gegebenes Materialvolumen auf einen längeren oder kürzeren Strangabschnitt zu verteilen. Eine derartige Verfahrensweise ist bei einem Stranpresskopf mit Speicherraum, aus dem aufeinanderfolgende Strangabschnitte absatzweise extrudiert werden, aus der bereits erwähnten DE—OS 25 44 609 bekannt. Eine derartige Verfahrensführung kann jedoch gemäss einem weiteren Merkmal der Erfindung auch mit Vorteil bei kontinuierlicher Extrusion der aufeinanderfolgenden Strangabschnitte durchgeführt werden mit dem Ergebnis, dass die Volumen und Gewichte der einzelnen Strangabschnitte weitaus weniger voneinander abweichen als dies bei bekannten Verfahren der Fall ist, obwohl es bei der kontinuierlichen Extrusion an der Möglichkeit fehlt, das Volumen des einzelnen Strangabschnittes durch Speicherung der entsprechenden Materialmenge in einem Speicherraum in sehr engen Grenzen festzulegen.

Eine andere Möglichkeit besteht darin, dass die Länge des Wanddickenprogramms in Anpassung an Änderungen der Relation zwischen Austrittslänge und effektiver Länge bzw. Austrittsgeschwindigkeit und effektiver Geschwindigkeit des freien Endes des Hohlstranges in Abhängigkeit vom Vergleichsergebnis von Längen und/oder Geschwindigkeiten verändert wird. D. h., dass die Länge, über die das Wanddickenprogramm abgerufen wird, vergrössert oder verkleinert wird. Im ersten Fall wird der Abstand zwischen zwei aufeinanderfolgenden Punkten auf dem Hohlstrang, welcher dem Abstand zweier aufeinanderfolgender Schaltpunkte des Programmierers entspricht, länger, im zweiten Fall kürzer.

Vorrichtungen zur Durchführung der beiden Verfahrensvarianten nach der Erfindung sind Gegenstand der Ansprüche 12 und 13. Ausgestaltungen hierzu sind in den Ansprüchen 14 bis 17 angegeben.

In der Zeichnung sind einige Ausführungsbeispiele der Erfindung dargestellt. Es zeigen:

Fig. 1 im Schema eine Extrusions-Blasvorrichtung, deren Spritzkopf als Speicherkopf ausgebildet ist,

Fig. 2 eine Extrusions-Blasvorrichtung mit kontinuierlicher Extrusion der Strangabschnitte,

Fig. 3 eine der Fig. 2 entsprechende Darstellung einer weiteren Ausführungsform.

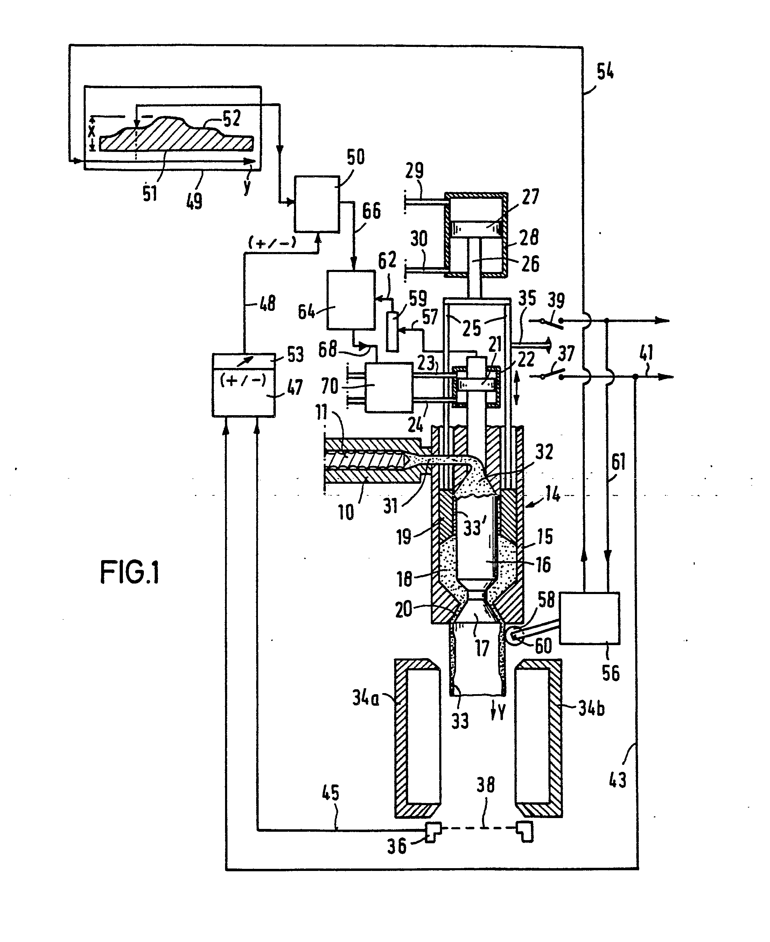

Die in Fig. 1 der Zeichnung im Schema dargestellte Vorrichtung zum Herstellen von Hohlkörpern aus thermoplastischem Material im Extrusions-Blasverfahren weist einen Extruder 10 auf, dessen Schnecke 11 durch einen nicht dargestellten Motor angetrieben wird. Das thermoplastische Material wird in den Extruder 10 als Granulat oder sonstwie in geeigneter Form gegeben. Dem Extruder 10 ist ein Strangpresskopf 14 nachgeschaltet, der im wesentlichen aus einem Gehäuse 15, einem stationären Dorn 16, einem darin koaxial und axial verschiebbar angeordneten Kern 17 sowie einem als Ringkolben ausgebildeten Kolben 19 besteht. Letzterer ist im Bereich eines Speicherraumes 18 ebenfalls axial hin- und herverschiebbar. Der Kern 17 stellt an seinem unteren Ende die innere Begrenzung einer ringspaltförmigen Austrittsöffnung 20 dar. Im oberen Endbereich ist der Kern 17 mit einem Kolben 21 versehen, der innerhalb eines Zylinders 22 geführt ist. Die Zu- und Ableitungen für das normalerweise hydraulische Druckmittel sind mit 23 und 24 bezeichnet.

Der Kolben 19 ist mittels über seinen Umfang verteilt angeordneter Bolzen 25 mit der Kolbenstange 26 eines Kolbens 27 verbunden, der in einem Zylinder 28 verschiebbar angeordnet ist. Zu- und Ableitungen 29 und 30 sind für das im allgemeinen hydraulische Druckmittel vorgesehen.

Das Gehäuse 15 des Strangpresskopfes 14 ist mit einer Eintrittsöffnung 31 für das thermoplastische Material versehen, das über zwei einander gegenüberliegende, sich nach unten verbreiternde Kanäle 32 in eine ringförmige Querschnittsform gebracht wird und über den Zwischenkanal 33′ in den Speicherraum 18 strömt und dabei den Kolben 19 nach oben bis in seine obere Endlage verschiebt. Die Konstruktion des Strangpresskopfes kann insoweit mit dem Gegenstand der DE—OS 17 04 791 und dem der US—PS 36 11 494 übereinstimmen.

Unterhalb des Strangpresskopfes 14 ist eine aus zwei Formhälften 34a, 34b bestehende Blasform angeordnet, der ein nicht dargestelltes übliches Mittel für die Zuführung eines Druckmittels zugeordnet ist, durch welches die von der Blasform 34a, 34b aufzunehmenden Vorformlinge in Gestalt schlauchförmiger Strangabschnitte 33 bis zur Anlage an der inneren Wandung der geschlossenen Blasform 34a, 34b aufgeweitet werden.

Die Vorrichtung arbeitet in der Weise, dass das im kontinuierlich laufenden Extruder 10 plastifizierte Material zunächst durch die Eintrittsöffnung 31, die Kanäle 32 und den Zwischenkanal 33′ in den ringförmigen Speicherraum 18 gefördert wird, wobei mit fortschreitender Füllung des Speicherraumes 18 der Kolben 19 aus seiner unteren Endlage nach oben in die obere Endlage verdrängt wird. Sobald der Kolben 19 seine — einstellbare — obere Position erreicht hat, wird über geeignete bekannte Mittel der Kolben 27 durch die Leitung 29 beaufschlagt mit dem Ergebnis, dass der Kolben 19 nach unten in seine untere Endlage bewegt wird. Dabei wird das im Speicherraum 18 befindliche thermoplastische Material durch die Austrittsöffnung 20 in Gestalt eines schlauchförmigen Hohlstranges oder Vorformlinges 33 ausgepresst, und zwar zwischen die beiden Formhälften 34a, 34b der zu diesem Zeitpunkt zumindest teilweise geöffneten Blasform. Dann wird — ausgelöst durch Steuerimpulse, deren Entstehung noch zu beschreiben sein wird — die Blasform um den Vorformling 33 geschlossen. Alsdann wird der Vorformling unter Anwendung des vorerwähnten Druckmittels aufgeweitet.

Alle diese Möglichkeiten und Massnahmen sind bekannt, so dass sie nicht näher beschrieben zu werden brauchen. Nach dem Aufweitvorgang bleibt der resultierende Hohlkörper noch eine bestimmte Zeitspanne innerhalb der Blasform 34a, 34b, die für eine ausreichende Abkühlung und Verfestigung des thermoplastischen Materials benötigt wird. Alsdann wird die Blasform geöffnet. Der fertige Hohlkörper, an dem sich im allgemeinen noch einige Abfallteile befinden, wird aus der Blasform herausgenommen, so dass letztere nunmehr für die Aufnahme des nächstfolgenden Vorformlinges oder Strangabschnittes 33 verfügbar ist.

Unterhalb der Blasform in einem geringen Abstand von derselben ist eine Fotozelle 36 so angeordnet, dass die ihr zugeordnete Lichtschranke 38 durch das untere Ende des Vorformlinges 33 unterbrochen wird, sobald dieser seine Soll-Länge erreicht hat. Ferner ist dem Kolben 19 ein Positionsanzeiger 35 zugeordnet, dessen Bewegungen von denen des Kolbens 19 abhängig sind. Dieser Positionsanzeiger 35 ist in der Lage, in den beiden Endpositionen des Kolbens 19 über Signalgeber 37, 39 Signale auszulösen. In der unteren Stellung des Kolbens 19 und damit des Positionsanzeigers 35 löst letzterer über den Signalgeber 37 ein Signal aus, welches besagt, dass der das Ausstossen des im Speicherraum 18 befindlichen Materials bewirkende Hub des Kolbens 19 nach unten, also in Richtung auf die Austrittsöffnung 20, und damit auch die Bildung des Vorformlinges 33 beendet sind. Dieses vom Signalgeber 37 kommende Signal gelangt über eine Leitung 41 an eine nicht dargestellte Einrichtung, welche das Schliessen der Blasform 34a, 34b um den Vorformling 33 bewirkt.

Weiterhin sind Fotozelle 36 und Signalgeber 37 über jeweils eine Leitung 45, 43 mit einer Vergleichseinrichtung 47 verbunden. Diese stellt fest, ob zu dem Zeitpunkt, in welchem der Positionsanzeiger 35 und damit der Kolben 19 die Stellung am Ende des Ausstosshubes des Kolbens 19 erreicht haben, die Lichtschranke 38 durch den Vorformling 33 unterbrochen ist oder nicht. Wenn von der Fotozelle 36 ein Signal in der Vergleichseinrichtung 47 eintrifft, bedeutet dies, dass der Vorformling 33 länger ist als seiner vorgegebenen Soll-Länge entspricht. Im anderen Fall, wenn kein Signal von der Fotozelle 36 vorliegt, ist der Vorformling 33 zu kurz. In jedem der beiden Fälle wird von der Vergleichseinrichtung 47 über ein Stellglied 53 ein Signal über eine Leitung 48 an ein einem Programmierer 49 nachgeschaltetes Angleichungsglied 50 gegeben. Im Programmierer 49 ist ein bestimmtes Programm hinsichtlich der Verteilung der Wanddicke des Vorformlinges 33 über dessen Länge eingestellt. Der jeweilige Wert X zwischen der Linie 51 und der Kurve 52 entspricht der Breite der Austrittsöffnung 20 und somit der Wandstärke des resultierenden Vorformlinges 33 über dessen Länge, die der Länge y im Programmierer 49 entspricht. D. h., dass die Kurve 52 den Wanddickenverlauf über die Länge des Vorformlinges 33 angibt.

Das im Programmierer 49 entsprechend der Kurve 52 in bezug auf die Wandstärke des Vorformlinges 33 eingestellte Programm wird beim Ausführungsbeispiel gemäss Fig. 1 in Abhängigkeit von der Länge des die Austrittsöffnung 20 passierenden Strangabschnittes abgefahren. Diese Abhängigkeit wird über eine Leitung 54 hergestellt, die ein Umsetzglied 56 mit dem Programmierer 49 verbindet. Am unteren Ende des Strangpresskopfes 14 unmittelbar unterhalb der Austrittsöffnung 20 ist ein Rad oder dgl. 58 um eine Achse 60 drehbar so angebracht, dass sie an der Aussenwandung des Vorformlinges 33 anliegt und durch diesen im Zuge des Ausstossvorganges bzw. der Abwärtsbewegung desselben in Rotation versetzt wird. D. h., dass die Anzahl der Umdrehungen der Rolle 58 abhängig ist von der Länge des Holstranges gemessen im Augenblick des Austretens aus dem Austrittsspalt 20. Entsprechendes gilt auch für die Austrittsgeschwindigkeit des Hohlstranges und die Rotationsgeschwindigkeit des Rades 58. Die von dern Rad 58 abgenommenen Werte, also entweder Länge oder Geschwindigkeit des Hohlstranges, werden im Umsetzglied 56 in geeignete elektrische Signale umgesetzt, die über die Leitung 54 in den Programmierer 49 gegeben werden, in welchem das Wandstärkenprogramm gemäss Kurve 52 in Abhängigkeit von der Austrittslänge oder der Austrittsgeschwindigkeit entlang der Linie y abgefahren wird.

Der Signalgeber 39 dient dabei unter anderem auch dazu, über die Leitung 61 bie Erreichen der oberen Endlage des Kolbens 19, die mit dem Beginn des Ausstosshubes und somit dem Ausstosen des Vorformlinges 33 zusammenfällt, das Umsetzglied 56 einzuschalten.

Die Änderung der Wandstärke entsprechend dem eingestellten Programm gemäss Kurve 52 erfolgt über eine axiale Verschiebung des Kernes 17. Fig. 1 der Zeichnung lässt erkennen, dass eine Verschiebung des Kernes 17 nach unten zu einer Verbrieterung, eine Verschiebung nach oben zu einer Verengung des Austrittsspaltes 20 führt.

Zwecks Betätigung des Kernes 17 in abhängigkeit vom eingestellten Wanddickenprogramm 52 ist dem Kolben 21 ein Positionsanzeiger 57 zugeordnet, der mit einem z. B. als Potentiometer ausgebildeten Positionsgeber 59 zusammenwirkt. Letzterer ist über eine Leitung 62 mit einer Regeleinrichtung 64 verbunden, die ihrerseits über Leitungen 66 bzw. 68 mit dem Programmierer 49 bzw. einem in die Leitungen 23, 24 eingeschalteten Servoventil 70 verbunden ist. Die Regeleinrichtung 64 vergleicht die über Positionsanzeiger 57 und Positionsgeber oder dgl. 59 eingegebene tatsächliche Lage des Kernes 17 mit dessen Soll-Lage, die sich aus dem Verlauf der Kurve 52 des Programmierers 49 sowie einer weiteren Einflussgrösse ergibt, die als Signal von der Vergleichseinrichtung 47 über die Leitung 48 in das Angleichungsglied 50 gegeben wird. Dieses Signal besagt, ob der Hohlstrang 33 zu kurz oder zu lang ist. In Abhängigkeit von der jeweiligen Situation wird im Angleichungsglied 50 der jeweils aus dem Programmierer entsprechend dem Verlauf der Kurve 52 kommenden Wert bezüglich der Breite des Austrittsspaltes 20 mit einem bestimmten Wert verknüpft. Wenn durch die Fotozelle 36 festgestellt worden ist, dass der Vorformling 33 zu lang ist, wird im Ausgleichungsglied 50 der aus dem Programmierer 49 kommende Wert der Spaltbreite etwas vergrössert mit dem Ergebnis, dass die Gesamtwanddicke des folgenden Vorformlinges 33 etwas grösser wird mit dem zwangsläufigen Ergebnis einer entsprechenden Abnahme der Länge des Vorformlinges 33, da dessen Volumen im wesentlichen durch das Volumen des Speicherraumes 18 festgelegt ist. Zwar erfolgt auch während des Ausstosshubes und damit während der Bildung des Vorformlinges 33 die Zulieferung von Material aus dem Extruder 10 in den Spritzkopf 14 hinein, so dass Schwankungen der Extruderleistung die Materialmenge und damit die Länge des Vorformlinges 33 beeinflussen können. Diese Schwankungen können jedoch durch geeignete Massnahmen, die beispielsweise in der DE—AS 25 44 609 beschrieben sind, ausgeglichen werden.

Es besteht ohne weiteres die Möglichkeit, anstelle der Fotozelle 36 und der ihr zugeordneten Lichtschranke 38, die lediglich zwei Betriebszustände alternativ erfassen kann, andere Einrichtungen zu verwerden, die in der Lage sind, Längenbereiche zu erfassen und zu unterscheiden, so dass es möglich ist, in bezug auf die Länge des Vorformlinges 33 einen Toleranzbereich oder dgl. vorzusehen mit dem Ergebnis, dass, solange die Länge des Vorformlinges 33 innerhalb dieses Toleranzbereiches liegt, eine Änderung der Spaltbreite über die Vergleichseinrichtung unterbleibt. Erst bei Unter- oder Überschreiten der Grenzen dieses Toleranzbereiches wird der Spalt im Sinne der vorstehenden Erläuterung in der einen oder anderen Richtung verändert werden.

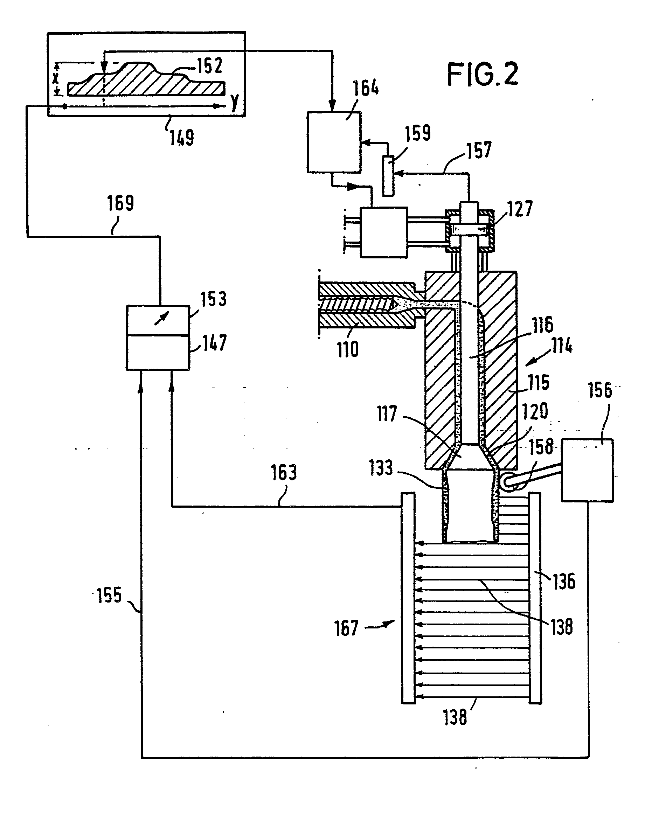

Bei dem in Fig. 2 dargestellten Ausführungsbeispiel, dessen mit dem Ausführungsbeispiel gemäss Fig. 1 übereinstimmenden Teile mit gleichen, jeweils um 100 höheren Bezugszeichen versehen sind, ist dem Extruder 110 ein Strangpresskopf 114 nachgeschaltet, aus welchem das thermoplastische Material als Hohlstrangabschnitt bzw. Vorformling 133 kontinuierlich aus einer ringförmigen Austrittsöffnung 120 ausgepresst wird. Die Steuerung der Wandstärke des Vorformlinges 133 in Abhängigkeit von einem im Programmierer 149 gespeicherten Programm erfolgt ebenfalls durch die axiale Verschiebung eines im Strangpresskopf 114 in einem Gehäuse 115 angeordneten Dornes 116, dessen unterer Abschnitt als Kern 117 die Austrittsöffnung 120 innenseitig begrenzt. Aufgrund der konischen Ausgestaltung des Kernes 117 und der gegenüberliegenden Wandteile des Gehäuses 115 hat eine axiale Verschiebung des Kernes 117 in der üblichen Weise eine Vergrösserung oder Verkleinerung der Spaltbreite de Austrittsöffnung 120 zur Folge.

Dem die axiale Verschiebung des Dornes 116 bewirkenden Kolben 127 ist analog dem Ausführungsbeispiel gemäss Fig. 1 ein Positionsanzeiger 157 zugeordnet, der mit einem z. B. als Potentiometer ausgebildeten Positionsgeber 159 zusammenwirkt. Im übrigen entspricht die Ausgestaltung der Ausführungsform gemäss Fig. 1 mit der Ausnahme, dass die Regeleinrichtung 164 dem Programmierer 149 ohne Zwischenschaltung eines Angleichungsgliedes nachgeschaltet ist.

Das der die Austrittslänge oder Austrittsgeschwindigkeit des Vorformlinges 133 messenden Rolle 158 nachgeschaltete Umsetzglied 156 ist über eine Leitung 155 mit einer Vergleichseinrichtung 147 verbunden, der ein Stellglied 153 nachgeschaltet ist. Eine weitere Leitung 163 stellt eine Verbindung zwischen einer unterhalb des Strangpresskopfes 114 angeordneten Einrichtung 167 für die Erfassung der effektiven Länge des Vorformlinges 133 oder der effektiven Geschwindigkeit, mit welcher sich das freie Ende des Vorformlinges 133 während des Extrusionsvorganges bewegt, und der Vergleichseinrichtung 147 her. Die Einrichtung 167 kann aus einer Vielzahl von übereinander angeordneten Fotozellen 136 bestehen, deren Lichtschranken 138 den Bereich erfassen, durch den sich der Vorformling 133 bis zum Erreichen seiner maximalen Länge hindurchbewegt. So kann zu jedem Zeitpunkt während des Extrusionsvorganges im Verlauf eines Arbeitszyklus' die effektive Länge des zu diesem Zeitpunkt am Strangpresskopf 114 hängenden Abschnitts des Vorformlinges 133 mit einer Genauigkeit erfasst werden, die dem Abstand zwischen zwei benachbarten Lichtschranken 138 entspricht. Die Geschwindigkeit, mit welcher von oben nach unten die aufeinanderfolgenden Lichtschranken 138 vom unteren freien Ende des Vorformlinges 133 während des Extrusionsvorganges unterbrochen werden, gibt eine ausreichende genaue Angabe über die Geschwindigkeit, mit welcher sich das freie Ende des Vorformlinges 133 nach unten nach oben bewegt, bis er seine Soll-Länge erreicht hat und die in Fig. 2 der Zeichnung aus Gründen der Übersichtlichkeit nicht dargestellte Blasform sich um den Vorformling schliesst.

Bei der Ausführungsform gemäss Fig. 2 wird davon ausgegangen, dass bei Vorliegen bestimmter, dem üblichen Betriebszustand des aus Extruder 110 und Strangpresskopf 114 bestehenden Systems entsprechender Betriebsparameter bei einem thermoplastischen Material mit bestimmten Eigenschaften auch bestimmte, nur innerhalb enger Grenzen schwankende Relationen zwischen der durch das Rad 158 gemessenen Austrittslänge bzw. der Austrittsgeschwindigkeit des Vorformlinges 133 einerseits und der jeweils zugehörigen effektiven Länge des Vorformlinges 133 bzw. der Geschwindigkeit, mit welcher sich das freie Ende desselben nach unten bewegt, vorhanden sind. Diese Relationen, die sich während des Extrusionsvorganges mit zunehmender Vorformlingslänge in bestimmter Weise ändern können, sind als Durchschnittswert in der Vergleichseinrichtung 147 also Vorgabe eingegeben. Eine Änderung dieser Relationen bewirkt das Auslösen eines Signals, dessen Zunahme oder Abnahme abhängig ist davon, in welcher Richtung sich die Relation ändert. Im Ergebnis bedeutet dies, dass die Länge des der Kurve 152 entsprechenden Programms y, bezogen auf die Austrittslänge des Vorformlinges 133, entweder vergrössert oder verkürzt wird, so dass bei Abweichungen von den vorgegeben Relationen zwischen Austrittslänge und effektiver Länge des Vorformlinges die den Schaltpunkten des Programmierers 159 entsprechenden Punkte oder Ebenen auf dem Vorformling 133 so verteilt sind, dass sie die richtige relative Lage auf dem seine Soll-Länge aufweisenden Vorformling einnehmen. Normalerweise wird dabei die Soll-Länge des Vorformlinges 133 als gegeben angenommen werden können, da durchweg die Blasform in dem Augenblick um den Vorformling geschlossen wird, wenn dieser seine Soll-Länge erreicht hat. Dies kann ohne Schwierigkeiten — wie auch beim Ausführungsbeispiel gemäss Fig. 1 — durch eine in einem bestimmten Niveau angeordnete Lichtschranke, welches im allgemeinen die zuunterst befindliche Lichtschranke sein wird, festgestellt werden. D. h., dass sich immer der absolute Wert der Austrittslänge zum feststehenden Wert der effektiven Soll-Länge ändern wird. Bei einer bei normalem Betriebszustand gegebenen Relation zwischen Austrittslänge und effektiver Länge von z. B. 1,8:1 würde somit eine Änderung der Austrittslänge auf den Wert 1,7 zu einer Verkürzung des Wandstärkenprogrammes führen, da beispielsweise bei einem Programmierer mit 10 Schaltpunkten der jeweils nächste Schaltpunkt nicht nach 18 cm, sondern 17 cm Austrittslänge des Strangabschnittes ausgelöst werden müsste. Umgekehrt gilt demzufolge, dass bei einer Zunahme des absoluten Wertes der Austrittslänge die Länge y des der Kurve 152 entsprechenden Programmes vergrössert wird, so dass der nächste Schaltpunkt des Programmierers jeweils z. B. nach 19 cm Austrittslänge ausgelöst wird. Die dieses Verlängen oder Kürzen der Länge 7 des Programmes bewirkenden Signale werden vom Stellglied 153 über eine Leitung 169 in den Programmierer 149 gegeben.

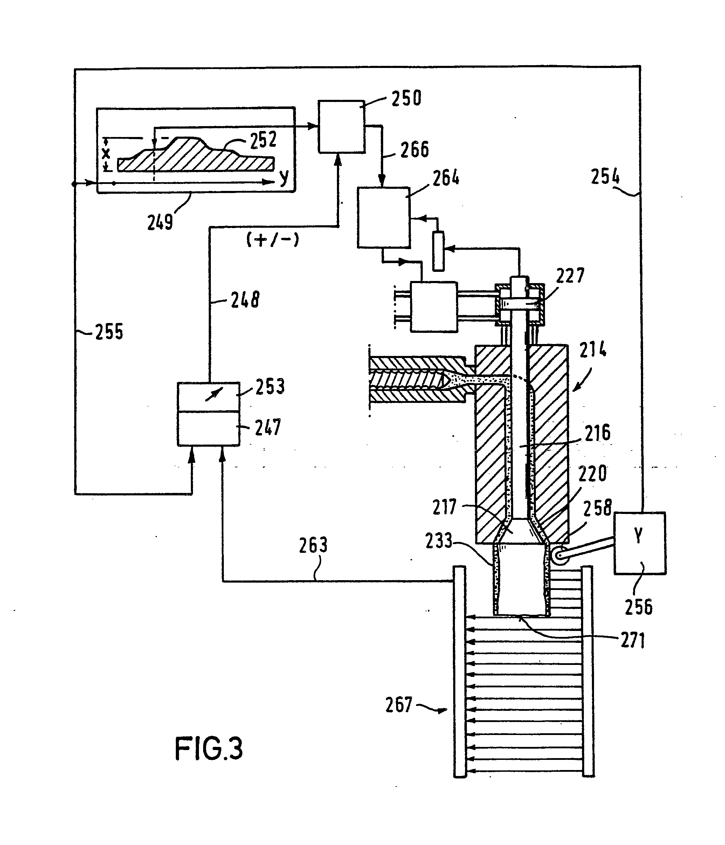

Das Ausführungsbeispiel gemäss Fig. 3 betrifft ebenfalls eine Vorrichtung, bei welcher der Vorformling 233 kontinuierlich aus dem Strangpresskopf 214 ausgepresst wird. Mit Fig. 2 übereinstimmende Teile sind mit gleichen jeweils um 100 höheren Bezugszeichen versehen.

Die Ausführungsform gemäss Fig. 3 sieht die Möglichkeit vor, die Spaltbreite der Austrittsöffnung 220 zur Regulierung des Volumens des den Vorformling 233 bildenden Materials zu verstellen. Zu diesem Zweck ist einmal das Umsetzglied 256, welches die vom Rad 258 erfasste Austrittslänge bzw. Austrittsgeschwindigkeit in Impulse oder andere geeignete Signale umsetzt, über eine Leitung 254 analog der Ausführungsform gemäss Fig. 1 mit dem Eingang eines Programmierers 249 verbunden, in dem ein Wanddickenprogramm entsprechend dem Verlauf der Kurve 252 eingestellt ist. Über eine Leitung 255 werden die vom Umsetzglied 256 kommenden Signale oder dgl. einer Vergleichseinrichtung 247 zugeführt, die ausserdem über eine Leitung 263 mit einer Einrichtung 267 verbunden ist, die wie bei der Ausführungsform gemäss Fig. 2 die effektive Länge des Vorformlinges 233 während des Extrusionsvorganges bzw. die Geschwindigkeit, mit welcher sich das freie Ende 271 des Vorformlinges 233 nach unten bewegt, erfasst.

Die Vergleichseinrichtung 247 ist über einem Signalgeber 253 und eine Leitung 248 mit einen Ausgleichungsglied 250 verbunden, das analog der Ausführungsform gemäss Fig. 1 dem Programmierer 249 nachgeschaltet ist. Über eine Leitung 266 ist die Verbindung mit einer Regeleinrichtung 264 und dieser nach geschalteten Einrichtungen hergestellt, die mit der Ausführung gemäss den Fig. 1 und 2 übereinstimmen und zur Regelung der axialen Bewegung des Dornes 216 und des Kernes 217 desselben dienen.

Auch hier gilt, dass von einer bestimmten Relation zwischen der Austrittslänge des Vorformlinges 233 und einer effektiven Endlänge ausgegangen wird, die in der Vergleichseinrichtung 247 eingestellt ist. Abweichungen von dieser zugrunde liegenden Relation haben in Abhängigkeit von der Richtung, in der sie erfolgen, die Abgabe eines Signals mit positivem oder negativem Vorzeichen durch die Leitung 248 an das Angleichungsglied 250 zur Folge, welches — wie im Falle des Ausführungsbeispiels gemäss Fig. 1 — die Aufgabe hat, den jeweils vom Programmierer 249 kommenden Wert bezüglich der Spaltbreite der Austrittsöffnung 220 entweder — bei Nullsignal von der Vergleichseinrichtung 247, welches besagt, dass die eingestellte Relation eingehalten ist — unverändert passieren zu lassen oder aber — bei Abweichung von dieser eingestellten Relation — den der Spaltbreite der Austrittsöffnung 220 entsprechenden Wert zu vergrössern im Sinne einer Vergrösserung oder Verengung des x-Wertes. Erstes wird dann der Fall sein, wenn über die Einrichtung 247 festgestellt wird, dass die Relation zwischen Austrittslänge und effektiver Länge sich zugunsten der Austrittslänge ändert, wenn diese beispielsweise statt des üblichen 1,8-fachen der effektiven länge das 1,9-fache wird. Die dann vorgenommene Vergrösserung der Spaltbreite der Austrittsöffnung 220 hat zur Folge, dass mehr Materialvolumen pro Längeneinheit die Austrittsöffnung 220 passiert, die Wanddicke somit vergrössert und demzufolge die Schlauchlänge verringert wird. Im umgekehrten Fall, wenn beispielsweise die Relation sich von 1,8 auf 1,7 ändert, bewirkt das von der Vergleichseinrichtung 147 kommende Signal im Ausgleichungsglied 250 eine Änderung des jeweils vom Programmierer 249 kommenden Signals im Sinne einer Verringerung der Spaltbreite der Austrittsöffnung 220 mit dem Ergebnis, dass weniger Volumen pro Längeneinheit des Vorformlinges 233 die Austrittsöffnung 220 passiert, ein gegebenes Volumen sich somit auf eine grössere Schlauchlänge verteilt. Diese Änderung der Spaltbreite erfolgt solange bis sich die in der Vergleichseinrichtung 247 vorgegebene Relation von z. B. 1,8 wieder eingestellt hat.

Im Ergebnis bedeutet dies, dass durch die Abhängigkeit von der Abweichung von einer vorgegebenen Relation zwischen Austrittslänge und effektiver Länge des Vorformlinges 233 der durch das im Programmierer 249 eingestellte Programm definierte Verlauf der Wanddicke über die Länge des Vorformlinges — oder einen Teil dieser Länge — gespreizt oder verengt wird, so dass sich die aus dem Vergleich der beiden Längen ergebende Korrektur der Spaltbreite der Austrittsöffnung 220 die aus dem Wanddickenprogramm vorgegebene Spaltbreite proportional verändert. Dies ist die Funktion des Angleichungsgliedes 250, dessen Ausgang letztenendes die Position des Kolbens 227 und damit des Kernes 217 der Austrittsöffnung 220 bestimmt.

Mit der Vorrichtung gemäss Fig. 3 ist es möglich, über die Spaltbreite der Austrittsöffnung des Strangpresskopfes die Wanddicke des Vorformlinges in ausreichend genauer Weise so zu beeinflussen, dass das Gewicht des Fertigerzeugnisses so nahe wie möglich an einem vorgegebenen Sollwert gehalten wird. Dies ist deshalb von Bedeutung, weil dies bei der kontinuierlichen Extrusion nicht ohne weiteres möglich ist, da hierbei im Gegensatz zu der Ausführungsform gemäss Fig. 1 bei der die Vorformlinge 33 diskontinuierlich ausgepresst werden, kein Speicherraum vorhanden ist, dessen Volumen auch das Volumen des fertigen Vorformlinges innerhalb enger Grenzen festlegt.

Für alle drei Ausführungsformen gilt, dass die längenabhängige Steuerung des Programmierers 49, 149, 249 wesentliche Vorteile gegenüber der volumenabhängigen oder zeitabhängigen Steuerung aufweist, und zwar insbesondere dadurch, dass eine durch eine Änderung der Einstellung der Wanddicke am Programmierer bewirkte Änderung der Wanddicke des Vorformlinges nicht automatisch eine Verschiebung aller anderen den Schaltpunkten des Programmierers entsprechenden Punkte auf dem Vorformling zur Folge hat. Dies ist für die praktische Handhabung, insbesondere für die Einstellung des Programmierers und eine nachträgliche Korrektur dieser Einstellung, von ganz erheblicher Bedeutung.

Zwar ist es bekannt, den Programmierer insoweit längenabhängig zu steuern als unter Anwendung einer Einrichtung etwa gemäss den Einrichtungen 167, 267 die Vorbewegung des freien Schlauchendes für die Steuerung des Programmierers benutzt wird (DE—A—1900532). Damit ist jedoch neben den bereits erwähnten Nachteilen ein erheblicher apparativer Aufwand verbunden, demgegenüber die Abnahme der Austrittslänge bzw. der Austrittsgeschwindigkeit verhältnismässig einfach ist, zumal das Rad oder die Rolle 58, 158, 258 ohne weiteres am Extrudat anliegen kann und von diesem mitgenommen wird, ohne dass es schädliche oder das Aussehen beeinträchtigende Spuren am Extrudat zurücklässt. Die Verwendung der Einrichtungen 167, 267 bei der Erfindung hingegen erlaubt eine wesentlich genauere Steuerung der Wandstärkenverteilung auf dem Extrudat, so dass ihre Verwendung zusätzliche Vorteile bringt, die der Stand der Technik nicht aufweist. Dies gilt insbesondere für die Ausführungsform gemäss Fig. 3, da sie die Einhaltung des Soll-Gewichtes des Extrudats und damit des daraus herzustellenden Endproduktes ermöglicht.

Die Vorrichtung 167 oder 267 kann auch als stufenloser Lichtvorhang ausgebildet sein, der entsprechend der kontinuierlichen Bewegung des Extrudats ein sich änderndes, analoges Signal abgibt.

Auch kann in jedem Fall anstelle des im Zusammenhang mit Fig. 2 erwähnten Durchschnittswertes der Relationen zwischen Austrittslänge und effektiver Länge des Extrudats eine Funktion in der Vergleichseinrichtung 147 bzw. 247 eingegeben sein, die beispielsweise in Form einer Kurbe die Änderungen der Relationen über die Länge des Vorformlinges für den Vergleich vorgibt.

**Patentansprüche**

1. Verfahren zum Herstellen von vorzugsweise schlauchförmigen Strangabschnitten (Vorformlingen) aus thermoplastischem Kunststoff mittels Extrudierens des warmplastischen Kunststoffes aus einem Strangpresskopf, in den der Kunststoff durch eine Eintrittsöffnung (31) von einem Extruder (10) kommend eintritt und aus dem er durch eine spaltartige Austrittsöffnung (20) austritt, wobei die Wandstärke des Strangabschnittes (33) während des Extrusionsvorganges nach einem bestimmten Programm verändert wird, dadurch gekennzeichnet, dass die Länge des die Austrittsöffnung (20) passierenden Strangabschnittes (33) (Austrittslänge) erfasst und die die programmabhängige Veränderung der Wandstärke bewirkende Einrichtung (49) in Abhängigkeit von der Austrittslänge gesteuert wird.

2. Verfahren zum Herstellen von vorzugsweise schlauchförmigen Strangabschnitten (Vorformlingen) aus thermoplastischem Kunststoff mittels Extrudierens des warmplastischen Kunststoffes aus einem Strangpresskopf, in den der Kunststoff durch eine Eintrittsöffnung von einem Extruder kommend eintritt und aus dem er durch eine spaltartige Austrittsöffnung austritt, wobei die Wandstärke des Strangabschnittes während des Extrusionsvorganges nach einem bestimmten Programm verändert wird, dadurch gekennzeichnet, dass die Geschwindigkeit des Strangabschnittes (33) beim Austreten aus der Austrittsöffnung (20) (Austrittsgeschwindigkeit) erfasst und die die programmabhängige Veränderung der Wandstärke bewirkende Einrichtung (49) in Abhängigkeit von der Austrittsgeschwindigkeit und der Zeit gesteuert wird.

3. Verfahren nach Anspruch 1, dadurch gekennzeichnet, dass die Austrittslänge des Strangabschnittes (33) einerseits und die jeweils zugehörige Effektivlänge des Strangabschnittes (33) andererseits gemessen und die beiden Werte miteinander verglichen und in Abhängigkeit vom Ergebnis dieses Vergleiches zusätzliche korrigierende, vom Programm unabhängige Veränderungen in bezug auf die Wandstärke bewirkt werden.

4. Verfahren nach Anspruch 2, dadurch gekennzeichnet, dass die Geschwindigkeit des Strangabschnittes (133) beim Austreten aus der Austrittsöffnung (120) einerseits und die Geschwindigkeit, mit welcher das freie Ende des Strangabschnittes (133) sich vorbewegt, andererseits gemessen und die beiden Werte miteinander verglichen und in Abhängigkeit vom Ergebnis dieses Vergleiches zusätzliche korrigierende, vom Programm unabhängige Veränderungen in bezug auf die Wandstärke bewirkt werden.

5. Verfahren nach Anspruch 3, dadurch gekennzeichnet, dass lediglich die Austrittslänge des fertigen Strangabschnittes (33) und die effektive Endlänge desselben miteinander verglichen werden.

6. Verfahren nach Anspruch 3, dadurch gekennzeichnet, dass die Austrittslänge des Strangabschnittes (133) und dessen zugehörige effektive Länge während der Dauer des Extrusionsvorganges gemessen und die beiden Werte miteinander verglichen werden.

7. Verfahren nach Anspruch 4, dadurch gekennzeichnet, dass die beiden Geschwindigkeiten während der Dauer des Extrusionsvorganges erfasst und verglichen werden.

8. Verfahren nach einem der vorhergehenden Ansprüche 3—7, dadurch gekennzeichnet, dass die Spaltbreite der Austrittsöffnung (20) zur korrigierenden Beeinflussung der Länge des Strangabschnittes (33) in Abhängigkeit von dem Vergleichsergebnis von Längen und/oder Geschwindigkeiten verändert wird.

9. Verfahren nach einem der vorhergehenden Ansprüche 3—7, dadurch gekennzeichnet, dass die Länge (y) des Wanddickenprogramms in Programmierer in Anpassung an Änderung der Relationen zwischen Austrittslänge und effektiver Länge bzw. Austrittsgeschwindigkeit und effektiver Geschwindigkeit des Hohlstranges in Abhängigkeit vom Ergebnis des Vergleiches der Längen- und/oder Geschwindigkeiten verändert wird.

10. Verfahren nach einem der vorhergehenden Ansprüche, dadurch gekennzeichnet, dass aufeinanderfolgende Strangabschnitte (33) intermittierend extrudiert werden.

11. Verfahren nach einem der vorhergehenden Ansprüche, dadurch gekennzeichnet, dass aufeinanderfolgende Strangabschnitte (133) kontinuierlich extrudiert werden.

12. Vorrichtung zur Durchführung des Verfahrens nach einem der Ansprüche 1, 3, 5, 6, 8 bis 11, die einen Extruder (10), einen Strangpreßkopf (14) mit einer Eintrittsöffnung (31) und eine Austrittsöffnung (20) sowie eine Programmiereinrichtung (49) für die Wandstärke des Strangabschnittes (33) aufweist, dadurch gekennzeichnet, dass eine dei Austrittslänge des Strangabschnittes (33) beim Verlassen des Strangpreßkopfes (14) messende Einrichtung (58, 56) vorgesehen ist, die mit der Programmiereinrichtung (49) zwecks Beeinflussung des Programmablaufs verbunden ist.

13. Vorrichtung zur Durchführung des Verfahrens nach einem der Ansprüche 2, 4, 7 bis 11, die einen Extruder (10), einen Strangpreßkopf mit einer Eintrittsöffnung (31) und einer Austrittsöffnung (20) sowie eine Programmiereinrichtung (49) für die Wandstärke des Strangabschnittes (33) aufweist, dadurch gekennzeichnet, dass eine die Austrittsgeschwindigkeit des Strangabschnittes (33) beim Verlassen des Strangpreßkopfes (14) messende Einrichtung (58, 56) vorgesehen ist, die mit der Programmiereinrichtung (49) verbunden ist.

14. Vorrichtung nach Anspruch 12, dadurch gekennzeichnet, dass zusätzlich eine die effektive Länge des Strangabschnittes (33) messende Einrichtung (36) vorgesehen und beiden Messeinrichtungen eine Einrichtung (47) zum Erfassen und Auswerten der sich daraus ergebenden Werte nachgeschaltet ist, die mit einer Einrichtung (50) verbunden ist, durch welche die Spaltbreite der Austrittsöffnung (20) beeinflussbar ist.

15. Vorrichtung nach Anspruch 13, dadurch gekennzeichnet, dass zusätzlich eine die Geschwindigkeit des freien Endes (271) des Strangabschnittes (233) messende Einrichtung (267) vorgesehen ist und beiden Messeinrichtungen (258, 256; 267) eine Einrichtung (247) zum Erfassen und Auswerten der sich daraus ergebenden Werte nachgeschaltet ist, die mit einer Einrichtung (250) verbunden ist, durch welche die Spaltbreite der Austrittsöffnung (220) beeinflussbar ist.

16. Vorrichtung nach Anspruch 14 oder 15, dadurch gekennzeichnet, dass der Programmiereinrichtung (49, 249) ein Angleichungsglied (50, 250) nachgeschaltet ist, dessen zweiter Eingang mit der Einrichtung (47, 247) zum Erfassen und Auswerten der Vergleichswerte und dessen Ausgang mit der Regeleinrichtung (64, 264) für die Spaltbreite der Austrittsöffnung (20, 220) verbunden ist.

17. Vorrichtung nach Anspruch 12 oder 13, dadurch gekennzeichnet, dass dem Programmierer (149), dessen Ausgang mit der Regeleinrichtung (164) für die Spaltbreite der Austrittsöffnung (120) verbunden ist, ein Einrichtung (147) zum Erfassen und Auswerten der Vergleichswerte vorgeschaltet ist, durch die die Verteilung des Wanddickenprogramms über die Länge des Strangabschnittes (133) beeinflussbar ist.

**Revendications**

1. Procédé pour réaliser des ébauches de préférence tubulaires en matière thermoplastique, par extrusion à chaud de la matière plastique hors d'une tête d'extrusion dans laquelle la matière plastique provenant d'une extrudeuse (10) pénétre par un orifice d'entrée (31) et ressort par une ouverture de sortie (20) en forme de fente, des moyens étant prévus pour faire varier l'épaisseur de la paroi de l'ébauche (33) pendant le processus d'extrusion, suivant un programme déterminé, procédé caractérisé en ce qu'on mesure la longueur de l'ébauche (33) qui passe à travers l'ouverture de sortie (20) (longueur d'extrusion), et en ce qu'on commande le dispositif (49) qui règle la variation programmée de l'épaisseur de la paroi de l'ébauche en fonction de la longueur d'extrusion.

2. Procédé pour réaliser des ébauches de préférence tubulaires en matière thermoplastique, par extrusion à chaud de la matière plastique hors d'une tête d'extrusion dans laquelle la matière plastique provenant d'une extrudeuse pénétre par un orifice d'entrée et ressort par une ouverture de sortie en forme de fente, des moyens étant prévus pour faire varier l'épaisseur de la paroi de l'ébauche pendant le processus d'extrusion, suivant un programme déterminé, procédé caractérisé en ce qu'on mesure la vitesse de sortie de l'ébauche (33) hors de l'ouverture de sortie (20), et en ce qu'on commande le dispositif (49) qui règle la variation programmée de l'épaisseur de la paroi en fonction du temps et de la vitesse de sortie.

3. Procédé selon la revendication 1, caractérisé en ce qu'on mesure d'une part la longueur d'extrusion de l'ébauche (33) et d'autre part la longueur effective de l'ébauche (33), dans chaque cas, et en ce qu'on compare entre elles ces deux valeurs, pour effectuer des corrections d'épaisseur de la paroi, indépendamment du programme, suivant le résultat de la comparaison précitée.

4. Procédé selon la revendication 2, caractérisé en ce qu'on mesure d'une part la vitesse d'extrusion de l'ébauche (133) à l'endroit de l'ouverture de sortie (120), et d'autre part la vitesse d'avance de l'extrémité libre de l'ébauche (133), et en ce qu'on compare entre elles les deux valeurs ainsi trouvées, pour effectuer des corrections d'épaisseur de la paroi, indépendamment du programme, suivant le résultant de la comparaison précitée.

5. Procédé selon la revendication 3, caractérisé en ce qu'on effectue seulement la comparaison de la longueur d'extrusion de l'ébauche complètement sortie (33), avec la valeur effective de la longueur définitive de la même ébauche.

6. Procédé selon la revendication 3, caractérisé en ce qu'on mesure la longueur d'extrusion de l'ébauche (133) et la longueur effective correspondante de l'ébauche pendant la durée du processus d'extrusion, et en ce qu'on compare entre elles les valeurs ainsi trouvées.

7. Procédé selon la revendication 4, caractérisé en ce qu'on mesure les deux vitesses pendant la durée du processus d'extrusion, et en ce qu'on compare les valeurs ainsi trouvées.

8. Procédé selon l'une des revendications 3 à 7, caractérisé en ce qu'on fait varier la largeur de la fente de l'ouverture de sortie (20), pour corriger la longueur de l'ébauche (33), en fonction du résultat de la comparaison entre les longueurs et/ou les vitesses.

9. Procédé selon l'une des revendications 3 à 7, caractérisé en ce qu'on fait varier la longueur (y) du programme d'épaisseur de la paroi dans le programmateur, pour compenser les variations des relations entre la longueur d'extrusion et la longueur effective, ou entre la vitesse de sortie et la vitesse effective de l'ébauche, suivant le résultat de la comparaison des longueurs et/ou des vitesses.

10. Procédé selon l'une des revendications 1 à 9, caractérisé en ce qu'on réalise des ébauches successives (33), en opérant par intermittence.

11. Procédé selon l'une des revendications 1 à 9, caractérisé en ce qu'on réalise des ébauches successives (133), en opérant de manière continue.

12. Dispositif pour la mise en oeuvre du procédé défini dans l'une des revendications 1, 3, 5, 6, et 8 à 11, comportant une extrudeuse (10), une tête d'extrusion (14) pourvue d'un orifice d'entrée (31) et d'une ouverture de sortie (20), ainsi qu'un programmateur (49) pour régler l'épaisseur de la paroi de l'ébauche (33), caractérisé en ce qu'il comporte un système (58, 56) pour mesurer la longueur d'extrusion de l'ébauche (33) à la sortie de la tête d'extrusion (14), ce système de mesure (58, 56) étant relié au programmateur (49), pour pouvoir agir sur le déroulement du programme.

13. Dispositif pour la mise en oeuvre du procédé défini dans l'une des revendications 2, 4, et 7 à 11, comportant une extrudeuse (10), une tête d'extrusion (14) pourvue d'un orifice d'entrée (31) et d'une ouverture de sortie (20), ainsi qu'un programmateur (49) pour régler l'épaisseur de la paroi de l'ébauche (33), caractérisé en ce qu'il comporte un système (58, 56) pour mesurer la vitesse de sortie de l'ébauche (33) hors de la tête d'extrusion (14), ce système (58, 56) étant relié au programmateur (49).

14. Dispositif selon la revendication 12, caractérisé en ce qu'il comporte en outre un système (36) pour mesurer la longueur effective de l'ébauche (33), et en ce qu'un autre système (47) est prévu à la suite des deux systèmes de mesure, pour mesurer et exploiter les valeurs ainsi fournies, cet autre système (47) étant relié à un organe de commande (50) qui sert à faire varier la largeur de la fente de l'ouverture de sortie (20).

15. Dispositif selon la revendication 13, caractérisé en ce qu'il comporte en outre un système (267) pour mesurer la vitesse de l'extrémité libre de l'ébauche (233), et en ce qu'un autre système (247) est disposé à la suite des deux systèmes de mesure (258, 256; 267), pour mesurer et exploiter les valeurs ainsi fournies, cet autre système (247) étant relié à un organe de commande (250) qui sert à faire varier la largeur de la fente de l'ouverture de sortie (220).

16. Dispositif selon l'une des revendications 14 ou 15, caractérisé en ce qu'un correcteur (50, 250) est disposé à la suite du programmateur (49, 249), une seconde entrée de ce correcteur étant reliée au système (47, 247) qui sert à mesurer et à exploiter les valeurs à comparer, et la sortie dudit correcteur étant relié à un régulateur (64, 264) qui commande la largeur de la fente de l'ouverture de sortie (20, 220).

17. Dispositif selon l'une des revendications 12 ou 13, caractérisé en ce qu'un autre système (147) est prévu en amont du programmateur (149) dont la sortie est reliée à un régulateur (164) qui commande la largeur de la fente de l'ouverture de sortiie (120), cet autre système (147) étant adapté à mesurer et à exploiter les valeurs à comparer, en permettant de modifier la répartition du programme de définition de l'épaisseur de la paroi de l'ébauche (133) dans le sens de la longueur de cette ébauche.

**Claims**

1. A method of producing preferably tubular extruded sections (parisons) of thermoplastic material by extrusion of the thermoplastic material from an extrusion head into which the plastic material passes through an inlet orifice (31) from an extruder (10) and from which it is discharged through a gap-like discharge orifice (20), wherein the wall thickness of the extruded section (33) is altered during the extrusion operation in accordance with a given program, characterised in that the length of the extruded section (33) (discharge length) which passes through the discharge orifice (20) is detected and the means (49) for producing the variation in wall thickness in accordance with said program is controlled in dependence on said discharge length.

2. A method of producing preferably tubular extruded sections (parisons) of thermoplastic material by extrusion of the thermoplastic material from an extrusion head into which the plastic material passes through an inlet orifice from an extruder and from which it is discharged through a gap-like discharge orifice, wherein the wall thickness of the extruded section is altered during the extrusion operation in accordance with a given program, characterised in that the speed of the extruded section (33) on issuing from the discharge orifice (20) (discharge speed) is detected and the means (49) for producing the variation in wall thickness in accordance on said program is controlled in dependence on the discharge speed and time.

3. A method according to claim 1 characterised in that the discharge length of the extruded section (33) on the one hand and the respectively associated effective length of the extruded section (33) on the other hand are measured and the two values are compared together, and the wall thickness is subjected to additional correcting variations which are independent of the program, in dependence on the result of the comparison.

4. A method according to claim 2 characterised in that the speed of the extruded section (133) on issuing from the discharge orifice (120) on the one hand and the speed at which the free end of the extruded section (133) advances on the other hand are measured and the two values are compared to each other, and the wall thickness is subjected to additional correcting variations which are independent of the program, in dependence on the result of the comparison.

5. A method according to claim 3 characterised in that only the discharge length of the finished extruded section (33) and the effective final length thereof are compared together.

6. A method according to claim 3 characterised in that the discharge length of the extruded section (133) and the associated effective length thereof are measured during the period of the extrusion operation and the two values are compared together.

7. A method according to claim 4 characterised in that during the period of the extrusion operation the two speeds are detected and compared together.

8. A method according to one of claims 3 to 7 characterised in that the width of the discharge orifice (20) is varied to correct the length of the extruded section (33) in dependence on the comparison result in respect of lengths and/or speeds.

9. A method according to one of claims 3 to 7 characterised in that the length (y) of the wall thickness program in the programmer is varied to adapt it to alterations in the relationships between the discharge length and the effective length or the discharge speed and the effective speed of the hollow extrusion, in dependence on the result of the comparison step in respect of lengths and/or speeds.

10. A method according to one of the preceding claims characterised in that successive extruded sections (33) are intermittently extruded.

11. A method according to one of the preceding claims characterised in that successive extruded sections (133) are extruded continuously.

12. Apparatus for carrying out the method according to one of claims 1, 3, 5, 6 and 8 to 11 comprising an extruder (10), an extrusion head (14) having an inlet orifice (31) and a discharge orifice (20), and a programming means (49) for programming in respect of the wall thickness of the extruded section (33), characterised in that there is provided a means (58, 56) for measuring the discharge length of the extruded section (33) on leaving the extrusion head (14), said means being connected to the programming means (49) for influencing execution of the program.

13. Apparatus for carrying out the method according to one of claims 2, 4 and 7 to 11 comprising an extruder (10), an extrusion head (14) having an inlet orifice (31) and a discharge orifice (20) and a programming means (49) for programming in respect of the wall thickness of the extruded section (33), characterised in that there is provided a means (58, 56) for measuring the discharge speed of the extruded section (33) on leaving the extrusion head (14), said means being connected to the programming means (49).

14. Apparatus according to claim 12 characterised in that there is additionally provided a means (36) for measuring the effective length of the extruded section (33), and that connected downstream of the two measuring means is a means (47) for detecting and analysing the values issuing therefrom, the means (47) being connected to a means (50) for influencing the width of the discharge orifice (20).

15. Apparatus according to claim 13 characterised in that there is further provided a means (267) for measuring the speed of the free end (271) of the extruded section (233), and that connected downstream of the two measuring means is a means (247) for detecting and analysing the values issuing therefrom, the means (247) being connected to a means (250) for influencing the width of the discharge orifice (220).

16. Apparatus according to claim 14 or claim 15 characterised in that a matching means (50, 250) is connected downstream of the programming means (49, 249) and has a second input connected to the means (47, 247) for detecting and analysing the comparison values, and an output connected to the controlling means (64, 264) for controlling the width of said discharge orifice (20, 220).

17. Apparatus according to claim 12 or claim 13 characterised in that connected upstream of the programming means (149) whose output is connected to the controlling means (164) for controlling the width of the discharge orifice (120), is a means (147) for detecting and analysing the comparison values and for influencing the distribution of the program in respect of wall thickness, over the length of the extruded section (133).

FIG.1

FIG.2

FIG.3